# EUROPÄISCHE PATENTANMELDUNG

(11) **EP 2 552 176 A2**
(43) Veröffentlichungstag der Anmeldung: **30.01.2013**
(21) Anmeldenummer: 12176274.4
(22) Anmeldetag: 13.07.2012
(51) Int. Cl.: H05B 6/12

(54) **Kochfeldvorrichtung**

(30) Priorität: 28.07.2011 ES 201131292
(71) Anmelder: BSH Bosch und Siemens Hausgeräte GmbH, 81739 München (DE)
(72) Erfinder: Franco Gutierrez, Carlos, 50017 Zaragoza (ES); Garcia Jimenez, Jose-Ramon, 50009 Zaragoza (ES); Garcia Martinez, Jose Andres, 50014 Zaragoza (ES); Garde Aranda, Ignacio, 50012 Zaragoza (ES); Llorente Gil, Sergio, 50009 Zaragoza (ES); Lopez Nicolas, Gonzalo, 50001 Zaragoza (ES); Paesa García, David, 50015 Zaragoza (ES); Palacios Tomas, Daniel, 50008 Zaragoza (ES); Sagües Blázquiz, Carlos, 50018 Zaragoza (ES)

(57) **Zusammenfassung**

Die Erfindung geht aus von einer Kochfeldvorrichtung, insbesondere einer Induktionskochfeldvorrichtung, mit zumindest einem Grundkörper (13a-c), zumindest zwei Heizelementen (20a-c, 21a-c, 22a-c, 23a-c, 24a-c, 25a-c, 26c, 27c), zumindest einer Aktoreinheit (30a-c, 32b-c, 34b-c, 36c, 38c), die dazu vorgesehen ist, die Heizelemente (20a-c, 21 a-c, 22a-c, 23a-c, 24a-c, 25a-c, 26c, 27c) bezüglich des Grundkörpers (13a-c) auf Linien (50b-c, 51 b-c, 52c, 53c, 54a-c, 55a-c, 56a, 56c, 57c) zu bewegen, und zumindest einer Steuereinheit (16a-c).

Um eine einfache Steuerung zu erreichen, wird vorgeschlagen, dass die Aktoreinheit (30a-c, 32b-c, 34b-c, 36c, 38c) dazu vorgesehen ist, zumindest die zwei Heizelemente (20a-c, 21 a-c, 22a-c, 23a-c, 24a-c, 25a-c, 26c, 27c) zumindest teilweise auf einer selben ersten Linie (54a-c, 55a-c, 56a, 56c, 57c) zu bewegen.

## Beschreibung

Die Erfindung geht aus von einer Kochfeldvorrichtung nach dem Oberbegriff des Anspruchs 1.

Es sind Kochfelder bekannt, die Heizelemente aufweisen, die dazu vorgesehen sind, unter Gargeschirren zu kreisen.

Die Aufgabe der Erfindung besteht insbesondere darin, eine gattungsgemäße Vorrichtung mit verbesserten Eigenschaften hinsichtlich einem geringen Steuerungsaufwand bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtung, mit zumindest einem Grundkörper, zumindest zwei Heizelementen, zumindest einer Aktoreinheit, die dazu vorgesehen ist, die Heizelemente bezüglich des Grundkörpers auf Linien zu bewegen, und zumindest einer Steuereinheit.

Es wird vorgeschlagen, dass die Aktoreinheit dazu vorgesehen ist, zumindest die zwei Heizelemente zumindest teilweise auf einer selben ersten Linie zu bewegen. Unter einem "Grundkörper" soll insbesondere ein Bauteil verstanden werden, das dazu vorgesehen ist, die Komponenten der Kochfeldvorrichtung aufzunehmen. Insbesondere ist der Grundkörper dazu vorgesehen, insbesondere durch seine Form, die Kochfeldvorrichtung zumindest in eine Raumrichtung, insbesondere in fünf Raumrichtungen, zumindest großteils abzugrenzen. Insbesondere ist der Grundkörper als Schale ausgebildet. Unter einem "Heizelement" soll insbesondere ein Element verstanden werden, das dazu vorgesehen ist, elektrische Energie, insbesondere mit einem Wirkungsgrad größer als 50 %, vorteilhaft größer als 70 %, vorzugsweise größer als 90%, in Wärme und/oder Wärmestrahlung umzuwandeln. Insbesondere ist ein Heizelement dazu vorgesehen, in zumindest einem Betriebsmodus eine Leistung von zumindest 50 W, insbesondere zumindest 200 W, vorteilhaft zumindest 1000 W, vorzugsweise zumindest 2000 W, umzusetzen. Insbesondere beträgt eine von dem Heizelement abgegebene Wärmeleistung maximal einer elektrischen Leistung, die in dieses eingespeist wird. Vorzugsweise ist das Heizelement dazu vorgesehen, auf einer Kochfeldplatte aufgestelltes Gargeschirr, insbesondere Töpfe und/oder Pfannen, zu erwärmen. Vorzugsweise ist das Heizelement in einer Betriebsposition unterhalb der Kochfeldplatte angeordnet. Vorzugsweise weist das Heizelement eine runde, insbesondere kreisrunde, Form auf. Insbesondere weist das Heizelement einen Durchmesser zwischen 15 cm und 32 cm auf. Insbesondere ist das Heizelement aus mehreren, vorzugsweise konzentrischen Heizteilen gebildet, die unabhängig voneinander beheizt werden können. Insbesondere weist das Heizelement eine längliche Form auf. Darunter, dass das Heizelement eine "längliche Form" aufweist, soll insbesondere verstanden werden, dass eine Breite des Heizelements maximal 95 %, insbesondere maximal 85 %, vorteilhaft maximal 75 %, besonders vorteilhaft maximal 55 %, vorzugsweise maximal 35 % einer Länge des Heizelements entspricht. Insbesondere weist das Heizelement zumindest in einer Aufsicht eine ovale, insbesondere eine elliptische und/oder stadionartige Form auf. Weiterhin sind zumindest im Wesentlichen rechteckige Formen denkbar. Unter einer "Länge" des Heizelements soll insbesondere die größte Ausdehnung des Heizelements verstanden werden. Unter einer "Breite" des Heizelements soll insbesondere die größte Ausdehnung des Heizelements in einer Richtung verstanden werden, die zumindest im Wesentlichen senkrecht zu einer Richtung, also einer Längsrichtung, orientiert ist, entlang der die Ausdehnung des Heizelements der Länge entspricht und die in einem betriebsbereiten Zustand zumindest im Wesentlichen parallel zu der Kochfeldplatte orientiert ist. Darunter, dass zwei Richtungen "im Wesentlichen parallel" liegen, soll insbesondere verstanden werden, dass sich zumindest zwei Geraden, die jeweils parallel zu unterschiedlichen der Richtungen sind, einen Winkel einschließen, der kleiner ist als 30°, insbesondere kleiner ist als 15°, vorteilhaft kleiner ist als 5°, vorzugsweise kleiner ist als 1°. Darunter, dass zwei Richtungen "im Wesentlichen senkrecht" zueinander orientiert sind, soll insbesondere verstanden werden, dass sich zumindest zwei Geraden, die jeweils parallel zu unterschiedlichen der Richtungen sind, in einem Winkel schneiden, der maximal 30°, insbesondere maximal 15°, vorteilhaft maximal 5°, vorzugsweise maximal 1° von 90° abweicht. Insbesondere ist das Heizelement als Induktionsheizelement ausgebildet. Unter einem "Induktionsheizelement" soll insbesondere ein Heizelement verstanden werden, das dazu vorgesehen ist, einen hochfrequenten Wechselstrom, insbesondere einen Wechselstrom mit einer Frequenz zwischen 20 kHz und 100 kHz, in ein magnetisches Wechselfeld zu wandeln, welches dazu vorgesehen ist, durch Induktion und/oder Ummagnetisierungseffekte in einem metallischen, insbesondere ferromagnetischen, Körper, insbesondere in einem Heizkörper und/oder einem Gargeschirr Wärme zu erzeugen. Insbesondere weist ein Induktionsheizelement zumindest einen gewickelten, insbesondere hohlen, Leiter auf. Unter einer "Steuereinheit" soll insbesondere eine elektronische Einheit verstanden werden, die vorzugsweise in einer Steuer- und/oder Regeleinheit einer Kochfeldvorrichtung zumindest teilweise integriert ist und die vorzugsweise dazu vorgesehen ist, zumindest eine Leistungseinstellung des Heizelements und/oder die Aktoreinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer-und/oder Regelprogramm, das dazu vorgesehen ist, von der Recheneinheit ausgeführt zu werden. Unter "vorgesehen" soll insbesondere speziell programmiert, ausgelegt und/oder ausgestattet verstanden werden. Unter einer "Aktoreinheit" soll insbesondere eine Einheit verstanden werden, die zumindest einen Aktor aufweist. Insbesondere ist die Aktoreinheit mit dem Heizelement mechanisch gekoppelt. Vorzugsweise ist die Aktoreinheit dazu vorgesehen, durch Ansteuerung eine Position des Heizelements zu verändern. Insbesondere verändert die Aktoreinheit durch Ansteuerung von der Steuereinheit die Position des Heizelements. Unter einem "Aktor" soll insbesondere ein mechatronisches Bauteil verstanden werden, das dazu vorgesehen ist, elektrische Signale in eine Bewegung, insbesondere in eine Schwenk- und/oder Linearbewegung, umzusetzen. Insbesondere beträgt eine Bewegungsgeschwindigkeit, mit der der Aktor das Heizelement bewegt, mehr als 0,1 m/s, insbesondere mehr als 0,5 m/s, vorteilhaft mehr als 1 m/s und vorzugsweise mehr als 2 m/s. Unter einer "Linie" soll insbesondere ein eindimensionales Objekt verstanden werden. Vorzugsweise liegt die Linie in zumindest einer Ebene. Insbesondere ist die Linie als geschlossene Linie, insbesondere Kreislinie, vorzugsweise als offene Linie, ausgebildet. Vorzugsweise weist eine Linie zwei Endpunkte auf, die auf geradem und/oder geschwungenem Weg verbunden sind. Darunter, dass ein Heizelement "auf" der Linie bewegt wird, soll insbesondere verstanden werden, dass ein Abstand zumindest eines Fixpunkts, vorzugsweise eines Mittelpunkts, des Heizelements zur Linie, insbesondere zumindest während einer Bewegung, zumindest im Wesentlichen gleich ist und vorzugsweise kleiner ist als 5 cm, insbesondere kleiner ist als 1 cm, vorteilhaft kleiner ist als 5 mm, vorzugsweise kleiner ist als 1 mm. Unter einem Abstand eines Punkts zu einer Linie soll insbesondere ein Minimum der Abstände aller Punkte der Linie zu dem Punkt verstanden werden. Darunter, dass eine Größe zumindest im "Wesentlichen gleich" ist, soll insbesondere verstanden werden, dass ein Minimum der Größe mindestens 40 %, insbesondere mindestens 60 %, vorteilhaft mindestens 85 %, vorzugsweise mindesten 95 %, eines Maximums der Größe entspricht. Das zwei Heizelemente dazu vorgesehen sind, "teilweise" auf einer selben Linie bewegt zu werden, soll insbesondere verstanden werden, dass ein zweites der Heizelement dazu vorgesehen ist, sich auf zumindest 10 %, insbesondere zumindest 30 %, vorteilhaft zumindest 50 %, vorzugsweise zumindest 70 % einer Linie zu bewegen, auf der sich ein erstes der Heizelemente bewegen kann. Vorzugsweise sind die zwei Heizelemente gleichartig, insbesondere mit gleicher Größe und/oder gleicher Form, ausgebildet. Es kann insbesondere eine einfache Steuerung erreicht werden.

Ferner wird vorgeschlagen, dass die Aktoreinheit dazu vorgesehen ist, zumindest die zwei Heizelemente zumindest im Wesentlichen auf Geraden zu bewegen. Es kann insbesondere eine einfache Steuerung erreicht werden.

Vorteilhaft grenzen zumindest die zwei Heizelemente zumindest in einem Betriebszustand, insbesondere in jedem Betriebszustand, aneinander an. Darunter, dass zwei Heizelemente "aneinander angrenzen", soll insbesondere verstanden werden, dass ein Abstand der Heizelemente, insbesondere ein Zwischenraum zwischen den Heizelementen, kleiner ist als 10 %, insbesondere kleiner ist als 5 %, vorzugsweise kleiner ist als 2 %, einer Breite der Heizelemente. Vorzugsweise berühren sich die Heizelemente. Es kann insbesondere eine große, gleichmäßig, insbesondere lückenlos, beheizbare Heizzone bereitgestellt und somit ein Komfort gesteigert werden.

Weiterhin wird vorgeschlagen, dass die Kochfeldvorrichtung zumindest eine erste Sensoreinheit aufweist, die dazu vorgesehen ist, eine Größe, eine Position, eine Form und/oder eine Begrenzung von Gargeschirr, das vorzugsweise auf die Kochfeldplatte aufgestellt ist, zu detektieren. Vorteilhaft ist die Steuereinheit dazu vorgesehen, eine Bewegung zumindest des ersten Heizelements in Abhängigkeit von Sensorwerten der Sensoreinheit zu steuern. Unter einer Sensoreinheit soll insbesondere eine Einheit verstanden werden, die eine zu messende Größe in eine elektrische Größe, insbesondere eine elektrisch auswertbare Größe, vorteilhaft eine elektrische Stromstärke und/oder eine elektrische Spannung, vorzugsweise ein elektrisches, insbesondere digitales, Signal, wandelt. Insbesondere ist die Sensoreinheit zumindest teilweise an dem ersten Heizelement angeordnet. Vorteilhaft ist die Sensoreinheit zumindest teilweise von dem ersten Heizelement gebildet. Insbesondere dient eine induktive Kenngröße eines als Induktionsheizelement ausgebildeten Heizelements als Sensorwert. Insbesondere ist die Steuereinheit dazu vorgesehen, das Heizelement zu einem positionierten Gargeschirr hinzubewegen. Es kann insbesondere eine flexible Heizzone erreicht werden.

Vorteilhaft ist die Steuereinheit dazu vorgesehen, zumindest eine Bewegung des ersten Heizelements während zumindest eines Heizvorgangs zu steuern. Insbesondere ist die Steuereinheit dazu vorgesehen, durch die Aktoreinheit zumindest das erste Heizelement unter der Heizzone derart, insbesondere periodisch, zu verfahren, dass es die Heizzone, zumindest teilweise, überstreicht. Es kann insbesondere eine gleichmäßige Wärmeverteilung erreicht werden.

Weiterhin wird vorgeschlagen, dass zumindest die zwei Heizelemente dazu vorgesehen sind, in zumindest einem Betriebszustand eine gemeinsame Heizzone zu beheizen. Unter einer "Heizzone" soll insbesondere ein Bereich, vorteilhaft ein Bereich auf der Kochfeldplatte, verstanden werden, auf dem Gargeschirr aufgestellt werden kann und dem durch einen Bediener eine Heizleistung zugeordnet werden kann. Insbesondere wird die Heizzone durch ein Gargeschirr bestimmt. Darunter, dass zwei Heizelement eine "gemeinsame" Heizzone beheizen, soll insbesondere verstanden werden, dass zwei Heizelemente ein selbes Gargeschirr beheizen, das in der Heizzone angeordnet ist. Es kann insbesondere ein erhöhter Komfort erreicht werden, da eine größere Fläche beheizt werden kann und/oder mit einer größeren Leistung geheizt werden kann.

Ferner wird vorgeschlagen, dass die Kochfeldvorrichtung zumindest ein weiteres Heizelement aufweist, das dazu vorgesehen ist, auf einer zweiten Linie bewegt zu werden, die zu der ersten Linie zumindest im Wesentlichen parallel ist und die sich vorzugsweise von einer Linie unterscheidet, auf der die zumindest zwei Heizelemente bewegt werden. Darunter, dass zwei Linien "parallel" sind, soll insbesondere verstanden werden, dass Abstände der ersten Linie zur zweiten Linie und Abstände der zweiten Linie zur ersten Linie an beliebigen Punkten der Linien zumindest im Wesentlichen gleich sind. Es kann insbesondere eine einfache Steuerung erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Kochfeld in einer schematischen Ansicht von oben,
- Fig. 2: ein weiteres erfindungsgemäßes Kochfeld in einer schematischen Ansicht von oben und
- Fig. 3: ein weiteres erfindungsgemäßes Kochfeld in einer schematischen Ansicht von oben.

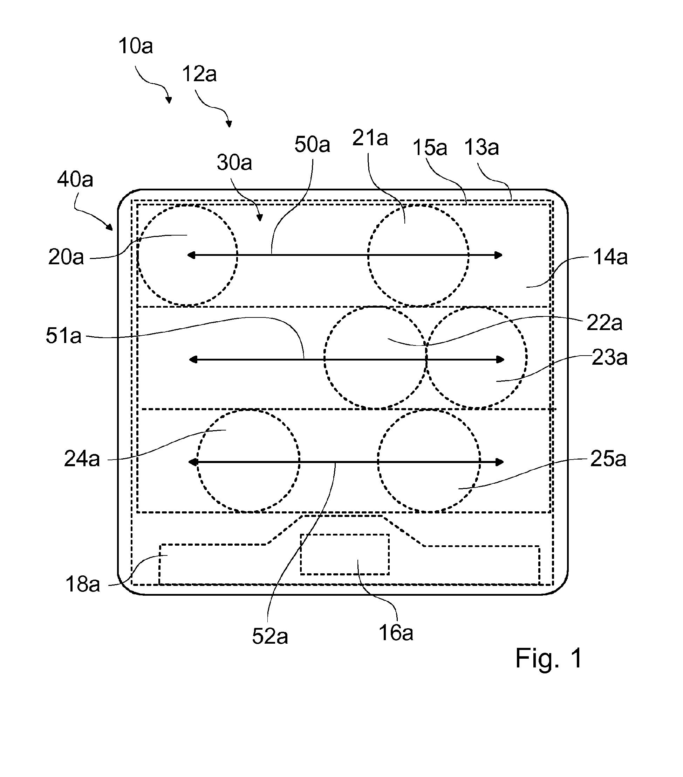

Figur 1 zeigt ein als Induktionskochfeld ausgebildetes Kochfeld 10a mit einer als Induktionskochfeldvorrichtung ausgebildeten Kochfeldvorrichtung 12a. Die Kochfeldvorrichtung 12a weist einen als Schale ausgebildeten Grundkörper 13a, in dem Kochfeldelektronik angeordnet ist, und eine als Glaskeramikplatte ausgebildete Kochfeldplatte 14a auf, die den Grundkörper 13a nach oben abschließt. Die Kochfeldvorrichtung 12a weist sechs Heizelemente 20a, 21a, 22a, 23a, 24a, 25a auf. Weiterhin weist die Kochfeldvorrichtung 12a eine Aktoreinheit 30a auf, die dazu vorgesehen ist, die Heizelemente 20a, 21 a, 22a, 23a, 24a, 25a bezüglich des Grundkörpers 13a auf Linien 54a, 55a, 56a zu bewegen. Weiterhin weist die Kochfeldvorrichtung 12a eine Steuereinheit 16a und eine Bedienerschnittstelle 18a auf. Die Bedienerschnittstelle 18a ist dazu vorgesehen, einem Bediener eine Eingabe von Heizleistungen zu ermöglichen und aktive Heizzonen auf einer Anzeigeeinheit auszugeben. Die Steuereinheit 16a ist dazu vorgesehen, eingegebene und Heizzonen zugeordnete Heizleistungen den Heizelementen 20a, 21 a, 22a, 23a, 24a, 25a zuzuordnen und Bewegungen der Heizelemente 20a, 21 a, 22a, 23a zu steuern. Die Aktoreinheit 30a ist dazu vorgesehen, die Heizelemente 20a, 21 a, bzw. 22a, 23a, bzw. 24a, 25a teilweise auf den selben Linien 54a, 55a, 56a zu bewegen. Die Linien 54a, 55a, 56a sind parallel zueinander. Die Aktoreinheit 30a ist dazu vorgesehen, die Heizelemente 20a, 21 a, 22a, 23a, 24a, 25a auf Geraden zu bewegen. Die Heizelemente 20a, 21 a, 22a, 23a, 24a, 25a sind als Induktionsheizelemente ausgebildet. Ferner weist die Kochfeldvorrichtung 12a eine Sensoreinheit 40a auf, die dazu vorgesehen ist, Positionen und Begrenzungen von auf der Kochfeldplatte 14a aufgestelltem Gargeschirr zu detektieren. Die Sensoreinheit 40a ist von den als Induktionsheizelementen ausgebildeten Heizelementen 20a, 21a, 22a, 23a, 24a, 25a gebildet. Durch Bewegung der Heizelemente 20a, 21a, 22a, 23a, 24a, 25a wird die Kochfeldplatte 14a auf darauf stehende Gargeschirre abgetastet. Befindet sich ein Gargeschirr über einem der Heizelemente 20a, 21 a, 22a, 23a, 24a, 25a ist eine Induktivität des Heizelements 20a, 21 a, 22a, 23a, 24a, 25a erhöht, wobei eine Änderung der Induktivität an einem Rand eines Gargeschirrs besonders stark ist. Die Steuereinheit 16a ist dazu vorgesehen, eine Bewegung der Heizelemente 20a, 21 a, 22a, 23a, 24a, 25a in Abhängigkeit von Sensorwerten der Sensoreinheit 40a zu steuern. In Abhängigkeit von den Sensorwerten der Sensoreinheit 40a, die auf Größe, Position und Form von aufgestelltem Gargeschirr schließen lassen, und von eingegebenen Heizleistungen, legt die Steuereinheit 16a eine Anzahl von Heizelementen 20a, 21a, 22a, 23a, 24a, 25a fest, die das Gargeschirr bzw. die Gargeschirre beheizen. Bei kleinen Leistungen oder kleinen Gargeschirren wird ein einzelnes Heizelement 20a, 21a, 22a, 23a, 24a, 25a verwendet. Steht das Gargeschirr an einer Position, die von zwei Heizelementen 20a, 21 a, 22a, 23a, 24a, 25a, die auf parallelen Linien 50a, 51 a, 52a bewegt werden, gleichermaßen erreichbar ist, beheizen beide Heizelemente 20a, 21a, 22a, 23a, 24a, 25a das Gargeschirr gemeinsam. Bei großen Gargeschirren bzw. hohen angeforderten Heizleistungen werden zwei oder mehr Heizelemente 20a, 21a, 22a, 23a, 24a, 25a verwendet, um eine Heizzone gemeinsam zu beheizen. Es gibt Betriebszustände, beispielsweise, wenn zwei Heizelemente 20a, 21 a, 22a, 23a, 24a, 25a eine gemeinsame Heizzone beheizen, in denen diese aneinander angrenzen. Beispielsweise können die Heizelemente 21 a, 22a, 23a, 25a dazu verwendet werden, ein großes, oval geformtes Gargeschirr zu beheizen, während die Heizelemente 20a, 24a dazu vorgesehen sind, kleine Gargeschirre zu beheizen. Die Steuereinheit 16a ist dazu vorgesehen, eine Bewegung der darunter angeordneten Heizelemente 20a, 21 a, 22a, 23a, 24a, 25a während eines Heizvorgangs zu steuern. Zu Beginn eines Heizvorgangs steuert die Steuereinheit 16a die Aktoreinheit 30a um die Heizelemente 20a, 21a, 22a, 23a, 24a, 25a unter auf der Kochfeldplatte 14a aufgestelltem Gargeschirr zu zentrieren. Ist ein Gargeschirr größer als ein darunter angeordnetes Heizelement 20a, 21 a, 22a, 23a, 24a, 25a ist die Steuereinheit 16a dazu vorgesehen, die Aktoreinheit 30a anzusteuern, damit dieses die darunter angeordneten Heizelemente 20a, 21 a, 22a, 23a unter dem Gargeschirr auf der entsprechenden Linie 54a, 55a, 56a hin- und herbewegt, um eine Heizleistungsverteilung zu erreichen. Die Aktoreinheit 30a ist dazu vorgesehen, die Heizelemente 20a, 21 a, 22a, 23a, 24a, 25a unabhängig voneinander zu bewegen. Die Aktoreinheit 30a ist von drei Sätzen Rollen gebildet, auf denen jeweils zwei der Heizelemente 20a, 21a, 22a, 23a, 24a, 25a gelagert sind. Die Sätze von Rollen weisen 15 nebeneinander angeordnete Rollen auf. Einige der 15 Rollen sind dazu vorgesehen, von Motoren angetrieben zu werden und so die darauf gelagerten Heizelemente 20a, 21 a, 22a, 23a, 24a, 25a zu bewegen. Die Heizelemente 20a, 21 a, 22a, 23a, 24a, 25a sind in ihrer Bewegung durch einen Rahmen 15a geführt. Weiterhin weist der Rahmen 15a Führungsschienen auf, die zwischen den Heizelementen 20a, 21 a, 22a, 23a, 24a, 25a angeordnet sind.

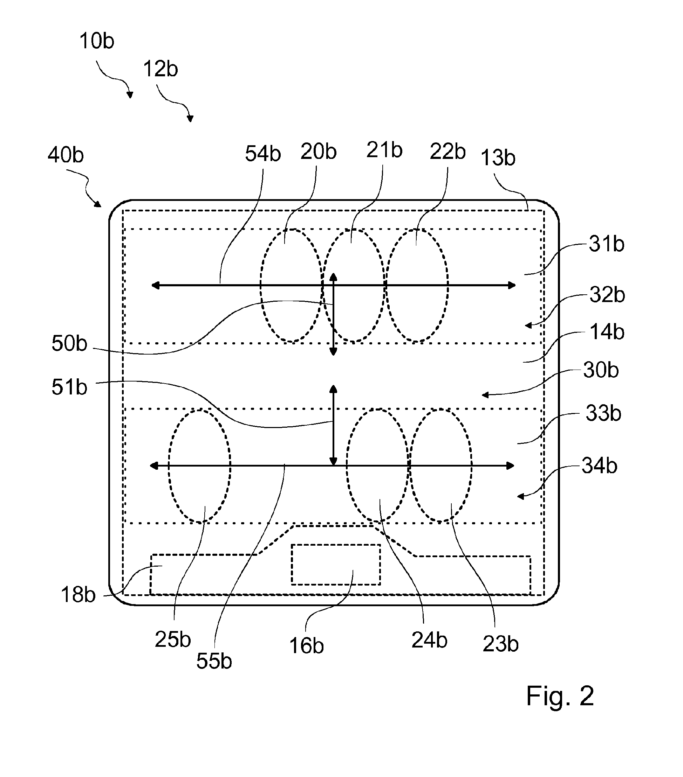

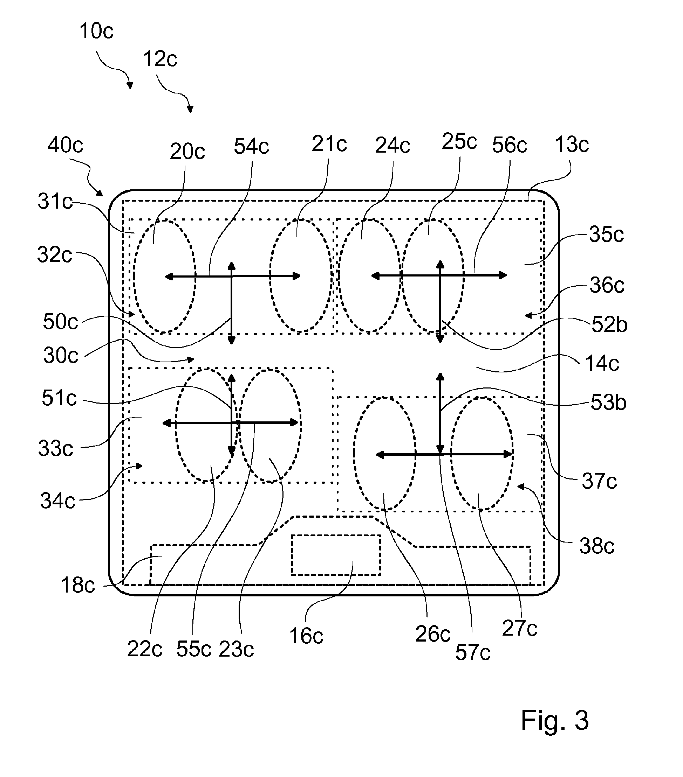

In den Figuren 2 und 3 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figur 1, verwiesen werden kann. Zur Unterscheidung der Ausführungsbeispiele ist der Buchstabe a in den Bezugszeichen des Ausführungsbeispiels in den Figuren 1 durch die Buchstaben b und c in den Bezugszeichen der Ausführungsbeispiele der Figuren 2 und 3 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figur 1, verwiesen werden.

In Figur 2 ist eine weitere erfindungsgemäße Kochfeldvorrichtung 12b dargestellt. Die Kochfeldvorrichtung 12b weist zwei Trägereinheiten 31 b, 33b auf. Auf jeder der Trägereinheiten 31 b, 33b sind drei als Induktionsheizelemente ausgebildete Heizelemente 20b, 21 b, 22b, bzw. 23b, 24b, 25b montiert. Die Heizelemente 20b, 21 b, 22b, 23b, 24b, 25b weisen eine elliptische Form auf. Eine Länge der Heizelemente 20b, 21 b, 22b, 23b, 24b, 25b beträgt 20 cm und eine Breite beträgt 10 cm. Jede der Trägereinheiten 31 b, 33b weist eine Aktoreinheit 32b bzw. 34b auf, die dazu vorgesehen ist, die jeweils auf der Trägereinheit 31 b, 33b montierten Heizelemente 20b, 21 b, 22b, bzw. 23b, 24b, 25b bezüglich der Trägereinheit 31 b, 33b und somit gegenüber einem Grundkörper 13b zu bewegen. Weiterhin weist die Kochfeldvorrichtung 12b eine Aktoreinheit 30b auf, die dazu vorgesehen ist, die Trägereinheiten 31 b, 33b und somit die Heizelemente 20b, 21 b, 22b, 23b, 24b, 25b bezüglich dem Grundkörper 13b zu bewegen. Die Aktoreinheit 30b ist dazu vorgesehen, die Trägereinheiten 31 b, 33b samt der Heizelemente 20b, 21 b, 22b, 23b, 24b, 25b entlang von Linien 50b, 51 b zu bewegen, die parallel zu Längsrichtungen der Heizelemente 20b, 21 b, 22b, 23b, 24b, 25b und auf Geraden liegen. Die Linien 50b, 51 b liegen dabei parallel zueinander. Die Heizelemente 20b, 21 b, 22b, 23b, 24b, 25b sind flexibel einsetzbar. Beispielsweise können die Heizelemente 20b, 21 b, 22b dazu verwendet werden, gemeinsam ein großes Gargeschirr zu beheizen, während die Heizelemente 23b, 24b dazu verwendet werden, ein mittelgroßes Gargeschirr zu beheizen und das Heizelement 25b ein kleines Gargeschirr beheizt. Alternativ kann, besonders bei niedrigen Heizleistungen, ein einzelnes Heizelement 20b, 21 b, 22b, 23b, 24b, 25b dazu verwendet werden, ein großes Gargeschirr zu beheizen, wobei sich das verwendete Heizelement 20b, 21 b, 22b, 23b, 24b, 25b unter dem Gargeschirr hin- und herbewegt. Die Heizelemente 20b, 21 b, 22b, bzw. 23b, 24b, 25b sind jeweils dazu vorgesehen, auf einer selben Linie 54b, 55b bezüglich der jeweiligen Trägereinheit 31 b, 33b bewegt zu werden. Die Linien 54b, 55b bewegen sich bei einer Bewegung der Trägereinheiten 31 b, 33b mit den Trägereinheiten 31 b, 33b mit. Die Trägereinheiten 31 b, 33b sind als Platten ausgebildet. Alternativ sind auch Ausgestaltungen denkbar, in denen die Trägereinheiten 31 b, 33b als Leisten oder Ähnliches ausgebildete sind.

Figur 3 zeigt eine Ausgestaltung einer Kochfeldvorrichtung 12c, die in Abwandlung von Figur 2 vier Trägereinheiten 31 c, 33c, 35c, 37c aufweist, die jeweils zwei Heizelemente 20c, 21 c, bzw. 22c, 23c, bzw. 24c, 25c, bzw. 26c, 27c tragen. Eine Aktoreinheit 30c ist dazu vorgesehen, die Trägereinheiten 31 c, 33c, 35c, 37c unabhängig voneinander bezügliche eines Grundkörpers 13c zu bewegen. Die Aktoreinheit 30c ist dazu vorgesehen, die Heizelemente 20c, 21 c, bzw. 22c, 23c, bzw. 24c, 25c, bzw. 26c, 27c auf Linien 50c, 51 c, 52c, 53c, die auf Geraden liegen, zu verschieben, die parallel zu Längsrichtungen der Heizelemente 20c, 21 c, 22c, 23c, 24c, 25c, 26c, 27c liegen. Die Trägereinheiten 31c, 33c, 35c, 37c weisen jeweils eine Aktoreinheit 32c, 34c, 36c, 38c auf, die dazu vorgesehen sind, die Heizelemente 20c, 21 c, bzw. 22c, 23c, bzw. 24c, 25c, bzw. 26c, 27c auf Linien 54c, 55c, 56c, 57c, die auf Geraden liegen, bezüglich der jeweiligen Trägereinheit 31 c, 33c, 35c, 37c zu bewegen. Die zwei Heizelemente 20c, 21 c, bzw. 22c, 23c, bzw. 24c, 25c, bzw. 26c, 27c sind dazu vorgesehen, paarweise auf selben Linien 54c, 55c, 56c, 57c bezüglich der jeweiligen Trägereinheit 31 c, 33c, 35c, 37c bewegt zu werden. Die Linien 54c, 55c, 56c, 57c liegen parallel zueinander. Durch Überlagerung von Bewegungen durch die Aktoreinheiten 30c und 32c bzw. 34c bzw. 36c bzw. 38c können vielfältige Bewegungsmuster, insbesondere kreisende Bewegungen der Heizelemente 20c, 21 c, 22c, 23c, 24c, 25c, 26c, 27c, erzeugt werden.

Durch die beschriebenen Ausgestaltungen kann eine Ausnutzung von großen Teilen der Kochfeldplatte 14 als Heizzone ermöglicht werden. Die Linien 50, 51, 52 ,53, 54, 55, 56, 57 beziehen sich jeweils auf Mittelpunkte der Heizelemente 20, 21, 22, 23, 24, 25, 26, 27 bzw. der Trägereinheiten 31, 33, 35, 37.

### Bezugszeichen

- 10: Kochfeld
- 12: Kochfeldvorrichtung
- 13: Grundkörper
- 14: Kochfeldplatte
- 15: Rahmen
- 16: Steuereinheit
- 18: Bedienerschnittstelle
- 20: Heizelement
- 21: Heizelement
- 22: Heizelement
- 23: Heizelement
- 24: Heizelement
- 25: Heizelement
- 26: Heizelement
- 27: Heizelement
- 30: Aktoreinheit
- 31: Trägereinheit
- 32: Aktoreinheit
- 33: Trägereinheit
- 34: Aktoreinheit
- 35: Trägereinheit
- 36: Aktoreinheit
- 37: Trägereinheit
- 38: Aktoreinheit
- 40: Sensoreinheit
- 50: Linie
- 51: Linie
- 52: Linie
- 53: Linie
- 54: Linie
- 55: Linie
- 56: Linie
- 57: Linie

## Patentansprüche

1. Kochfeldvorrichtung, insbesondere Induktionskochfeldvorrichtung, mit zumindest einem Grundkörper (13a-c), zumindest zwei Heizelementen (20a-c, 21 a-c, 22a-c, 23a-c, 24a-c, 25a-c, 26c, 27c), zumindest einer Aktoreinheit (30a-c, 32b-c, 34b-c, 36c, 38c), die dazu vorgesehen ist, die Heizelemente (20a-c, 21a-c, 22a-c, 23a-c, 24a-c, 25a-c, 26c, 27c) bezüglich des Grundkörpers (13a-c) auf Linien (50b-c, 51 b-c, 52c, 53c, 54a-c, 55a-c, 56a, 56c, 57c) zu bewegen, und zumindest einer Steuereinheit (16a-c), **dadurch gekennzeichnet, dass** die Aktoreinheit (30a-c, 32b-c, 34b-c, 36c, 38c) dazu vorgesehen ist, zumindest die zwei Heizelemente (20a-c, 21 a-c, 22a-c, 23a-c, 24a-c, 25a-c, 26c, 27c) zumindest teilweise auf einer selben ersten Linie (54a-c, 55a-c, 56a, 56c, 57c) zu bewegen.

2. Kochfeldvorrichtung nach Anspruch 1, **dadurch gekennzeichnet, dass** die Aktoreinheit (30a-c, 32b-c, 34b-c, 36c, 38c) dazu vorgesehen ist, zumindest die zwei Heizelemente (20a-c, 21 a-c, 22a-c, 23a-c, 24a-c, 25a-c, 26c, 27c) zumindest im Wesentlichen auf Geraden zu bewegen.

3. Kochfeldvorrichtung nach einem der vorhergehenden Ansprüche, **dadurch gekennzeichnet, dass** zumindest die zwei Heizelemente (20a-c, 21a-c, 22a-c, 23a-c, 24a-c, 25a-c, 26c, 27c) zumindest in einem Betriebszustand aneinander angrenzen.

4. Kochfeldvorrichtung nach einem der vorhergehenden Ansprüche, **gekennzeichnet durch** zumindest eine erste Sensoreinheit (40a-c), die dazu vorgesehen ist, eine Größe, eine Position, eine Form und/oder eine Begrenzung von Kochgeschirr zu detektieren.

5. Kochfeldvorrichtung nach Anspruch 4, **dadurch gekennzeichnet, dass** die Steuereinheit (16a-c) dazu vorgesehen ist, eine Bewegung zumindest eines der zumindest zwei Heizelemente (20a-c, 21 a-c, 22a-c, 23a-c, 24a-c, 25a-c, 26c, 27c) in Abhängigkeit von Sensorwerten der Sensoreinheit (40a-c) zu steuern.

6. Kochfeldvorrichtung nach einem der vorhergehenden Ansprüche, **dadurch gekennzeichnet, dass** die Steuereinheit (16a-c) dazu vorgesehen ist, zumindest eine Bewegung des ersten Heizelements (20a-c, 21a-c, 22a-c, 23a-c, 24a-c, 25a-c, 26c, 27c) während zumindest eines Heizvorgangs zu steuern.

7. Kochfeldvorrichtung zumindest nach einem der vorhergehenden Ansprüche, **dadurch gekennzeichnet, dass** zumindest die zwei Heizelemente (20a-c, 21 a-c, 22a-c, 23a-c, 24a-c, 25a-c, 26c, 27c) in zumindest einem Betriebszustand dazu vorgesehen sind, eine gemeinsame Heizzone zu beheizen.

8. Kochfeldvorrichtung nach einem der vorhergehenden Ansprüche, **gekennzeichnet durch** zumindest ein weiteres Heizelement (20a-c, 21 a-c, 22a-c, 23a-c, 24a-c, 25a-c, 26c, 27c), das dazu vorgesehen ist, auf einer zweiten Linie (50b-c, 51 b-c, 52c, 53c, 54a-c, 55a-c, 56a, 56c, 57c) bewegt zu werden, die zu der ersten Linie (50b-c, 51 b-c, 52c, 53c, 54a-c, 55a-c, 56a, 56c, 57c) zumindest im Wesentlichen parallel ist.

9. Kochfeld mit einer Kochfeldvorrichtung (12a-c) nach einem der vorhergehenden Ansprüche.

10. Verfahren zur Steuerung einer Kochfeldvorrichtung (12a-c) nach einem der Ansprüche 1 bis 8.
